(19) Europäisches Patentamt
European Patent Office
Office européen des brevets

(11) EP 1 906 216 A1

(12) **EUROPEAN PATENT APPLICATION**
published in accordance with Art. 153(4) EPC

(43) Date of publication:
**02.04.2008 Bulletin 2008/14**

(21) Application number: **06781104.2**

(22) Date of filing: **14.07.2006**

(51) Int Cl.:
***G02B 5/30*** *(2006.01)*

(86) International application number:
**PCT/JP2006/314030**

(87) International publication number:
**WO 2007/010841 (25.01.2007 Gazette 2007/04)**

(30) Priority: **19.07.2005 JP 2005208751**
**29.11.2005 JP 2005344098**

(71) Applicant: **Mitsubishi Chemical Corporation**
**Minato-ku**
**Tokyo 108-0014 (JP)**

(72) Inventors:
- **OIZUMI, Junichi**
**Mitsubishi Chem. Group Sci.& Tech.**
**Yokohama-shi, Kanagawa (JP)**
- **SANO, Hideo**
**Mitsubishi Chemi. Group Sci.& Tech.**
**Yokohama-shi, Kanagawa (JP)**
- **HASEGAWA, Ryuichi**
**Mitsubishi Chem. Group Sci.&Tech**
**Yokohama-shi, Kanagawa (JP)**
- **KADOWAKI, Masami**
**Mitsubishi Chem. Group Sci.&Tech.**
**Yokohama-shi, Kanagawa (JP)**

(74) Representative: **HOFFMANN EITLE**
**Patent- und Rechtsanwälte**
**Arabellastrasse 4**
**81925 München (DE)**

(54) **COMPOSITION FOR ANISOTROPIC PIGMENTED FILM, ANISOTROPIC PIGMENTED FILM, AND POLARIZING ELEMENT**

(57) An anisotropic dye film that exhibits a high dichroism and a high uniformity in a coating film is formed at a high level of productivity. In the composition for an anisotropic dye film containing a dye and being capable of forming a lyotropic liquid crystal phase, the time until the relaxation modulus G measured 0.01 seconds after the application of strain drops to 1/10 is equal to or shorter than 0.1 seconds at a temperature of 5°C. The composition contains a cation and a strongly acidic anion that respectively account for contents in the range of 0.9 to 0.99 equivalence and in the range of 0.02 to 0.1 equivalence relative to the content of the acidic groups of the dye. An anisotropic dye film is formed using this composition for an anisotropic dye film. A polarizing element is formed using this anisotropic dye film.

EP 1 906 216 A1

## Description

Field of the Invention

The present invention relates to a composition for an anisotropic dye film that can be used to form an anisotropic dye film having a high dichroism and being useful as a polarizing film or the like included in an indicating element of a light control device, a liquid crystal device (LCD), and an organic electroluminescent device (OLED), as well as an anisotropic dye film formed using such a composition for an anisotropic dye film and a polarizing device formed using such an anisotropic dye film.

Background of the Invention

In an LCD, a linearly polarizing plate or a circularly polarizing plate is used to control the optical rotation and birefringence in display. Also in an OLED, a circularly polarizing plate is used to avoid reflection of external light. Such polarizing plates (polarizing elements) have conventionally used iodine as a dichroic material. When used in a polarizing plate, however, iodine has been lacking in heat resistance and light resistance and posed a problem that the polarizing performance thereof is degraded over time, because of the strong tendency thereof to sublime.
To address this problem, researchers have been investigating the application of an anisotropic dye film as a polarizing film containing an organic dye as a dichroic material (a dichroic dye) as described in, for example, Documents 1, 2 and 3 mentioned below.
Dichroic dyes mentioned in these documents are capable of forming a lyotropic liquid crystal phase in a solvent such as water and an alcohol, and of being easily oriented by using an orientation substrate or an external field such as a flow field, an electric field and a magnetic field. For example, it has been known that the use of Brilliant Yellow (C.I. Direct Yellow 4) results in the formation of a positive dichroic dye film whereas the use of Methylene Blue (C.I. Basic Blue 9) or Amaranth (C.I. Food Red 9) results in the formation of a negative dichroic dye film.
However, such known dichroic dye films have posed a problem of low dichroism. This reduction in dichroism has been caused not only by the Schlieren defect inherent in liquid crystals described in those documents, but also by light leakage due to defects or cracks on a film originating in dry distortion at the time of drying an applied coating in the process of forming such a dye film in a wet film-forming process.
Meanwhile, to improve the uniformity in the thickness of a coating film in the process of forming an anisotropic dye film in an wet film-forming method while ensuring a high productivity, the concentration of the dye contained in the composition for an anisotropic dye film is preferably low. However, a lowered concentration would be likely to allow the abovementioned dry distortion to be large, thus resulting in the dichroism being rather reduced than enhanced.
The foregoing facts have been making it difficult to achieve a balance among the high uniformity in a coating film, a high productivity and a high dichroism in the process of forming an anisotropic dye film.
Document 1 U.S. Patent No. 2,400,877
Document 2 Dreyer, J.F., Phys. And Colloid Chem., 1948, 52, 808., "The Fixing of Molecular Orientation"
Document 3 Dreyer, J.F., Journal de Physique, 1969, 4, 114., "Light Polarization From Films of Lyotropic Nematic Liquid Crystals"

In addition, Documents 4, 5 and 6, which relate to liquid crystals, are listed below.

Document 4 J. Lydon, "Chromonics" in "Handbook of Liquid Crystals vol.2B: Low Molecular Weight Liquid Crystals II," p.981, edited by D. Demus, J. Goodby, G.W. Gray, H.-W. Spiess and V. Vill, Wiley-VCH, (1998).
Document 5 P.G. de Gennes and J. Prost, "Dynamical Properties of Smectics and Columnar Phases" in "The Physics of Liquid Crystals" p.408, Clarendon Press. Oxford, (1993)
Document 6 M. Gharbia, M. Cagnon and G. Durand, "Column undulation instability in a discotic liquid crystal," J. Physique Lett., 46 (1985), L683.

Disclosure of the Invention

The object of the present invention is to provide a composition for an anisotropic dye film that can be used to form an anisotropic dye film having a high dichroism and a high uniformity in a coating film at a high productivity, as well as a high-dichroism anisotropic dye film formed using such a composition for an anisotropic dye film and a polarizing device formed using such an anisotropic dye film.
The composition for an anisotropic dye film according to the first aspect of the present invention is a composition

for an anisotropic dye film that contains a dye and is capable of forming a lyotropic liquid crystal phase, wherein the time until the relaxation modulus G measured 0.01 seconds after the application of strain drops to 1/10 is equal to or shorter than 0.1 seconds at a temperature of 5°C.

The anisotropic dye film according to the second aspect of the present invention is an anisotropic dye film formed using the abovementioned composition for an anisotropic dye film.

The anisotropic dye film according to the third aspect of the present invention is an anisotropic dye film containing a dye, and cations and strongly acidic anions that respectively account for contents in the range of 0.9 to 0.99 equivalence and in the range of 0.02 to 0.1 equivalence relative to the content of the acidic groups of the dye.

The anisotropic dye film according to the fourth aspect of the present invention is an anisotropic dye film formed using the anisotropic dye film according to any one of the second and third aspects.

Detailed Description

The inventors carried out extensive investigations and found that the use of a composition for an anisotropic dye film that contains a dye and is capable of forming a lyotropic liquid crystal phase, wherein the time until the relaxation modulus G measured 0.01 seconds after the application of strain drops to 1/10 is equal to or shorter than 0.1 seconds at a temperature of 5°C, enables efficiently forming an anisotropic dye film that exhibits a high dichroism and a high uniformity in a coating film.

The composition for an anisotropic dye film according to the present invention is a composition for an anisotropic dye film that contains dyes and is capable of forming a lyotropic liquid crystal phase, wherein the time until the relaxation modulus G measured 0.01 seconds after the application of strain drops to 1/10 is equal to or shorter than 0.1 seconds at a temperature of 5°C.

The coating film obtained by applying a wet film-forming method to the composition for an anisotropic dye film according to the present invention is uniform and excellent in productivity as well. This makes it possible to form an anisotropic dye film that exhibits a high dichroism and a high uniformity in a coating film at a high productivity. The possible reason for this is described below.

While a dye-containing lyotropic liquid crystal is drying in the wet-forming process, the dye concentration becomes high and thus the interaction between the dye aggregates becomes strong, and as a result, the relative positions of the aggregates in the solution acquires orderliness. This orderliness can be monitored through the observation of X-ray diffraction patterns, for example, as described in Document 4 (Lydon) mentioned above. When strain is applied to a liquid that has such orderliness in the relative positions of the aggregates contained therein, the relative positions are changed and an elastic stress is then generated to recover the original state while the entire body of aggregates flows to recover the equilibrium positions, relaxing this stress. Such a relaxation process that occurs in a liquid crystal phase requires time longer than the translational and rotational relaxation time of each aggregate, as described in Document 5 (de Gennes et al.) mentioned above or other documents.

A thin film obtained by applying and drying lyotropic liquid crystals oriented by an external field sometimes includes distortion inside itself, and this may cause defects similar to ones mentioned in foregoing Document 6 (Gharbia et al.) or cracks on the film to occur, thereby significantly lowering the coating film properties. However, the relaxation time required to return the aggregate positions to the equilibrium state thereof being sufficiently shorter than the time necessary for drying the film would possibly prevent such defects from occurring.

To shorten this relaxation time, it is preferable that the orderliness in the relative positions of aggregates is low. The orderliness in the relative positions of aggregates can be evaluated based on the half-value width of the X-ray diffraction peak shown in Document 4 (Lydon) mentioned above. To reduce the orderliness in the relative positions of aggregates, it is important to suppress the electric repulsive force working between each pair of aggregates adequately by enhancing the ion strength through addition of a salt or lowering the neutrality of the dyes. When the neutrality of the dye is excessively lowered, the dye is separated out. Also, when the excessive amount of a salt is added, the salt separated out on the coating film reduces the degree of orientation of the dye.

Based on this theory, the inventors examined the use of a composition for an anisotropic dye film wherein the time until the relaxation modulus G measured 0.01 seconds after the application of strain drops to 1/10 is equal to or shorter than 0.1 seconds at a temperature of 5°C, assuming that this composition exhibits a short relaxation time described above when the concentration thereof is increased by drying, and found that the use of such a composition can prevent defects and cracks on a coating film from occurring and enables forming an anisotropic dye film exhibiting a high dichroism and a high uniformity in a coating film at a high level of efficiency.

The dye contained in the composition for an anisotropic dye film according to the present invention is preferably an azo dye, and such a composition for an anisotropic dye film according to the present invention is useful especially in the production of an anisotropic dye film in a wet film-forming process.

Also, the composition for an anisotropic dye film according to the present invention preferably contains cations and strongly acidic anions that respectively account for contents in the range of 0.9 to 0.99 equivalence and in the range

of 0.02 to 0.1 equivalence relative to the content of the acidic groups of the dyes.

The anisotropic dye film according to the present invention is an anisotropic dye film formed using such a composition for an anisotropic dye film according to the present invention.

The anisotropic dye film according to the present invention is also an anisotropic dye film containing a dye, and cations and strongly acidic anions that respectively account for contents in the range of 0.9 to 0.99 equivalence and in the range of 0.02 to 0.1 equivalence relative to the content of the acidic groups of the dye.

The anisotropic dye film according to the present invention is suitably used in several types of polarizing elements such as a polarizing plate included in an indicating element of a light control device, a liquid crystal device (LCD), and an organic electroluminescent device (OLED).

The polarizing element according to the present invention is a polarizing element that contains such an anisotropic dye film according to the present invention.

The present invention enables forming an anisotropic dye film that has few defects and exhibits a high dichroism and a high uniformity in a coating film at a high productivity. Using such an anisotropic dye film, a polarizing element that is excellent in heat resistance, light resistance and polarizing performance can be obtained.

The modes for carrying out the present invention are described in detail below. However, the following statement concerning the constituent features includes only one of embodiments of the present invention, and does not impose any limitation on the present invention.

In addition, the anisotropic dye film mentioned in the present invention represents a dye film that has anisotropy in terms of electromagnetic characteristics between given two directions selected from three directions in the three-dimensional coordinate system composed of the axis along the direction of the dye film thickness and given two in-plane axes that are perpendicular to each other. Examples of the electromagnetic characteristics include optical characteristics such as absorbance and refraction, and electric characteristics such as resistance and capacity. Examples of a film that has optical anisotropy in terms of absorbance, refraction and other characteristics include a linearly polarizing film, a circularly polarizing film, a retardation film and an anisotropic conductive film.

The anisotropic dye film according to the present invention is preferably used as a polarizing film, a retardation film or an anisotropic conductive film, and more preferably used as a polarizing film.

[Composition for an Anisotropic Dye Film]

First, the composition for an anisotropic dye film according to the present invention is explained.

<Time until the Relaxation Modulus G measured 0.01 seconds after the Application of Strain drops to 1/10 at a Temperature of 5°C>

The composition for an anisotropic dye film according to the present invention is a composition for an anisotropic dye film that contains a dye and is capable of forming a lyotropic liquid crystal phase, wherein the time until the relaxation modulus G measured 0.01 seconds after the application of strain drops to 1/10 (hereinafter, sometimes referred to as "relaxation-modulus-dropping time") is equal to or shorter than 0.1 seconds at a temperature of 5°C.

In the present invention, the relaxation modulus of the composition for an anisotropic dye film means the relaxation modulus measured in the Stress Relaxation mode of ARES Rheometer, a viscoelasticity measurement system (manufactured by Rheometric Scientific, Inc.), under the conditions described below. The relaxation modulus may be measured using an equivalent of this apparatus.

Measurement method of relaxation modulus

The measurement tool is a cone plate having a diameter of 50 mm when the relaxation modulus of the sample (composition for an anisotropic dye film) is not higher than 100 $dyn/cm^2$, or a cone plate having a diameter of 25 mm when the value is higher than 100 $dyn/cm^2$. The sample temperature is maintained at 5°C. Prior to the start of measurement, pre-shear is applied to the sample for 10 seconds at a shear rate of 1000 $s^{-1}$ in order to eliminate the hysteresis that has been generated during placing the sample. Then the sample is let stand for 1 minute and analyzed with the strain set at 10%.

In this way, the composition for an anisotropic dye film according to the present invention is a composition wherein the time until the relaxation modulus G measured 0.01 seconds after the application of strain drops to 1/10 is equal to or shorter than 0.1 seconds. The shorter the relaxation-modulus-dropping time the better, and it is more preferably equal to or shorter than 0.07 seconds, and most preferably equal to or shorter than 0.05 seconds. The relaxation-modulus-dropping time longer than 0.1 seconds would make it impossible to produce an anisotropic dye film having a high dichroism and a high uniformity in a coating film at a high level of production efficiency.

More specifically, the composition for an anisotropic dye film according to the present invention is a composition

containing at least a dye and a solvent, wherein the dye molecules aggregates in a polar solvent such as water and an alcohol as described in Non-patent Document 3, and the composition is capable of forming a lyotropic liquid crystal phase utilizing the shape anisotropy of the aggregates.

<Dye>

The dye used in the present invention is subjected to a wet film-forming process, described later, and thus is preferably soluble in water or an organic solvent, and more preferably soluble in water. A proper choice of the dye results in the successful completion of the composition according to the present invention.

In addition, the molecular weight of the dye used in the present invention is preferably 200 or higher and more preferably 300 or higher, as well as preferably 1500 or lower and more preferably 1200 or lower, while the dye is in a free state not forming a salt.

Specific examples of the dye include, but are not limited to, condensed polycyclic dyes and azo dyes. For example, the dyes described in U.S. Patent No. 2,400,877, Dreyer, J.F., Phys. And Colloid Chem., 1948, 52, 808., "The Fixing of Molecular Orientation," Dreyer, J.F., Journal de Physique, 1969, 4, 114., "Light Polarization From Films of Lyotropic Nematic Liquid Crystals" and J. Lydon, "Chromonics" in "Handbook of Liquid Crystals Vol.2B: Low Molecular Weight Liquid Crystals II," D. Demus, J. Goodby, G.W. Gray, H.W. Spiessm and V. Vill ed., Willey-VCH, P.981-1007, (1998), may be used.

In particular, an azo dye is preferable. Among the azo dyes, a disazo dye and a trisazo dye are preferable. When used in a polarizing film, a y acid-based or RR acid-based azo dye is preferable because such a dye absorbs light uniformly in the full range of wavelengths within the visible light spectrum.

In the present invention, a dye whose free acid form is expressed by the following formula is particularly preferable.

[Chemical Formula 1]

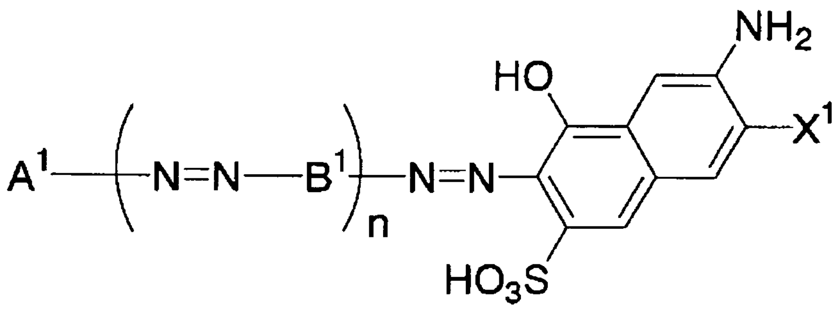

In the formula above, $X^1$ represents a hydrogen atom or a sulfo group. $A^1$ represents a phenyl group, a naphthyl group or an aromatic heterocyclic group, and may have any substituent groups. $B^1$ represents an aromatic hydrocarbon group or an aromatic heterocyclic group, and may have any substituent groups. n is 1 or 2.

When $A^1$ is an aromatic heterocyclic group, examples of the heteroatom of the aromatic heterocyclic group include a nitrogen atom and a sulfur atom, with the aromatic heterocyclic group containing a nitrogen atom being preferable for lowering the concentration necessary in development of the liquid crystallinity. Specific examples of the aromatic heterocyclic group include pyridyl, quinolyl, thiazolyl and benzothiazolyl groups, with a preferred example being the pyridyl group.

When $B^1$ is an aromatic hydrocarbon group, the specific examples thereof include phenylene and naphthylene groups. The phenylene group is preferably 1,4-phenylene group and the naphthylene group is preferably 1,4-naphthylene group, since these groups exhibit the interaction described earlier. When $B^1$ is an aromatic heterocyclic group, the examples include divalent groups corresponding to the groups mentioned as the examples of $A^1$ in the case $A^1$ is an aromatic heterocyclic group.

Examples of substituent groups that a phenyl group, a naphthyl group or an aromatic heterocyclic group as $A^1$ or an aromatic hydrocarbon group or an aromatic heterocyclic group as $B^1$ may have include alkyl, alkoxy, amino, acyl, carbamoyl, carboxy, sulfo, hydroxy and cyano groups.

Particularly preferred examples of the dye used in the present invention include the dye expressed by the structural formula (I-1) below (hereinafter, sometimes referred to as "Dye No. (I-1)," the dye expressed by the structural

formula (I-2) below (hereinafter, sometimes referred to as "Dye No.(I-2)," the dye expressed by the structural formula (II-1) below (hereinafter, sometimes referred to as "Dye No.(II-1)," the dye expressed by the structural formula (III-1) below (hereinafter, sometimes referred to as "Dye No.(III-1)," the dye expressed by the structural formula (III-2) below (hereinafter, sometimes referred to as "Dye No.(III-2)," and the dye expressed by the structural formula (IV-1) below (hereinafter, sometimes referred to as "Dye No.(IV-1)." As described later, these dyes may be in a salt form.

[Chemical Formula 2]

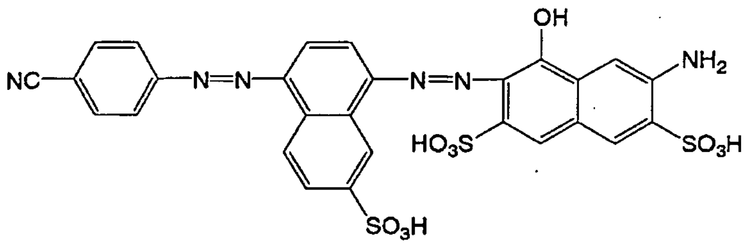

(I-1)

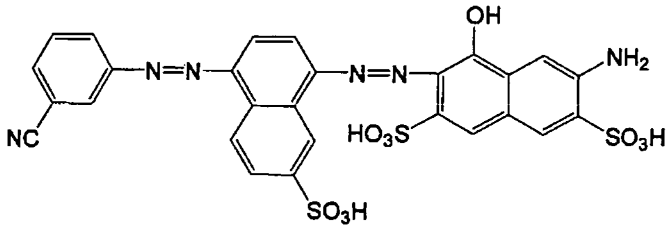

(I-2)

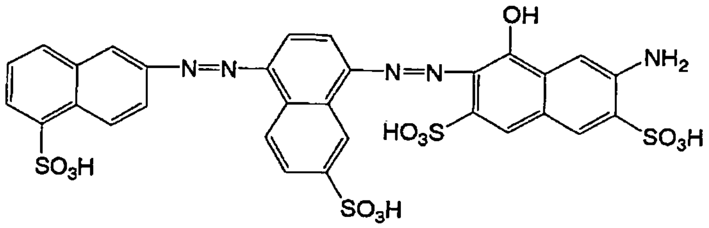

(II-1)

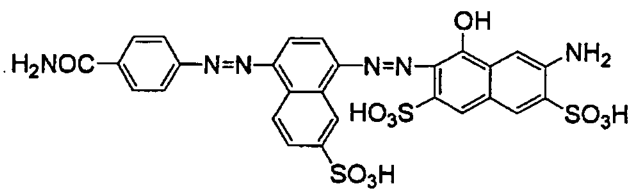

(III-1)

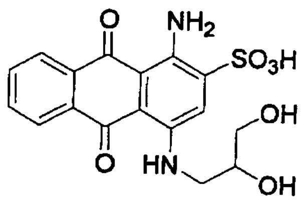

(III-2)

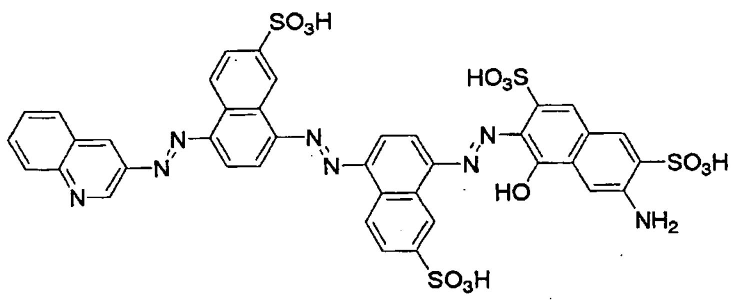

(IV-1)

These dyes can be produced in some known methods. For example, the abovementioned Dye No.(I-1) can be made through the following steps A) and B).

A) A monoazo compound is synthesized from 4-aminobenzonitrile and 8-amino-2-naphthalenesulfonic acid (1,7-Cleves acid) according to an ordinary method consisting of diazotization and coupling processes (e.g., the method

described in "Shinsenryo Kagaku (New Dye Chemistry)" written by Yutaka Hosoda, published by GIHODO SHUPPAN Co., Ltd., Pages 396 and 409).

B) The resulting monoazo compound is also diazotized according to an ordinary method and coupled with 7-amino-1-naphthol-3,6-disulfonic acid (RR acid), and then allowed to separate out in the presence of sodium chloride so that the target Dye No. (I-1) is obtained.

The composition for an anisotropic dye film according to the present invention may contain one of the abovementioned dyes or a combination of two or more kinds thereof. Also, dyes other than the examples described above may be added as long as the added one does not disrupt the orientation. This makes it possible to produce anisotropic dye films having different colors.

When the other kinds of dyes are added, preferred examples of the added dyes include C.I. Direct Yellow 12, C.I. Direct Yellow 34, C.I. Direct Yellow 86, C.I. Direct Yellow 142, C.I. Direct Yellow 132, C.I. Acid Yellow 25, C.I. Direct Orange 39, C.I. Direct Orange 72, C.I. Direct Orange 79, C.I. Acid Orange 28, C.I. Direct Red 39, C.I. Direct Red 79, C.I. Direct Red 81, C.I. Direct Red 83, C.I. Direct Red 89, C.I. Acid Red 37, C.I. Direct Violet 9, C.I. Direct Violet 35, C.I. Direct Violet 48, C.I. Direct Violet 57, C.I. Direct Blue 1, C.I. Direct Blue 67, C.I. Direct Blue 83, C.I. Direct Blue 90, C.I. Direct Green 42, C.I. Direct Green 51, C.I. Direct Green 59, Alizarin Red S Monohydrate, Acid Blue 45, Acid Green 25, Alizarin Blue Black B, Acid Blue 25, Anthraquinone-2-sulfonic acid, Quinalizarin, Anthraquinone-1,5-disulfonic acid sodium salt, Acid Violet 34, Acid Green 27, Acid Blue 40, Acid Blue 80, Alizarin Safirol SE, Alizarin Astrol, Reacive Blue 5, Reactive Blue 19, Reactive Blue 114, Acid Violet 42 and Fast Violet B.

Among these dyes, the dyes having acidic groups may be used in a free acid form thereof or in the form where some of the acidic groups form salt. Also, the dyes in a salt form and the dyes in a free acid form may be mixed with each other. Furthermore, when the dye is produced in a salt form, it may be used directly or converted into another desired salt form. A salt form can be changed to another one according to any known conversion method, for example, using the following methods.

1) A method in which the salt is exchanged through the step of adding a strong acid such as hydrochloric acid into the aqueous solution of the dye produced in a salt form so that the dye is separated out in a free acid form, and the subsequent step of neutralizing the acidic groups contained in the dye by adding an alkali solution containing a desired counter ion (e.g., lithium hydroxide aqueous solution)

2) A method in which the salt is exchanged in the form of a salted-out cake through the step of adding an excess amount of a neutral salt containing a desired counter ion (e.g., lithium chloride) into the aqueous solution of the dye produced in a salt form

3) A method in which the salt is exchanged through the step of allowing the aqueous solution of the dye produced in a salt form to pass through a highly acidic ion exchange resin so that the dye is separated out in a free acid form, and the subsequent step of neutralizing the acidic groups contained in the dye by adding an alkali solution containing a desired counter ion (e.g., lithium hydroxide aqueous solution)

4) A method in which the salt is exchanged through the step of allowing the aqueous solution of the dye produced in a salt form to react with a highly acidic ion exchange resin that has been treated with an alkali solution containing a desired counter ion (e.g., lithium hydroxide aqueous solution)

Examples of the salt form of the abovementioned dyes include a salt of an alkali metal such as Na, Li and K, a salt of an ammonium, which may be substituted by an alkyl group of a hydroxyalkyl group, and an organic amine salt. Examples of the organic amine include a lower alkylamine having one to six carbon atoms, a lower alkylamine having a hydroxy substituent group and one to six carbon atoms, a lower alkylamine having a carboxy substituent group and one to six carbon atoms. When the dye takes such a salt form, the number of salt forms does not always have to be one and different salt forms may exist simultaneously.

Preferably, the length of each dye aggregate contained in the composition for an anisotropic dye film according to the present invention is long enough to prevent the orientation of the resulting anisotropic film from being disrupted. To improve the orientation degree of the anisotropic dye film, the length of each dye aggregate contained in the composition for an anisotropic dye film according to the present invention is preferably equal to or longer than 5 nm. More preferably, the dyes are well-arranged to a sufficient extent during the application of an external field so as to improve the orientation of the resulting anisotropic dye film.

In addition, the length of each dye aggregate contained in the composition for an anisotropic dye film can be obtained by, for example, X-ray diffraction peak analysis described in D.J. Edwards et al., "Aggregation and lyotropic liquid crystal formation of anionic azo dyes for textile fibers," in "Physico-Chemical Principles of Color Chemistry" p.83, edited by A.T. Peters and H.S. Freeman, Blackie Academic & Professional, (1996).

<Solvent>

Examples of the solvent suitably used in the composition for an anisotropic dye film according to the present invention include water, a water-miscible organic solvent and mixtures thereof. Specific examples of the organic solvent include an alcohol such as methyl alcohol, ethyl alcohol, isopropyl alcohol, a glycol such as ethylene glycol and diethylene glycol, a cellosolve such as methyl cellosolve and ethyl cellosolve, and such solvents may be used as a pure solvent or a combined solvent constituted of two or more kinds thereof.

<Dye Concentration>

When the composition for an anisotropic dye film according to the present invention is a solution containing such a solvent as described above, the concentration of the dye contained in the composition for an anisotropic dye film is preferably 0.01 wt% or higher and particularly preferably 0.1 wt% or higher, as well as is preferably 50 wt% or lower and particularly preferably 30 wt% or lower, although these ranges may vary depending on the film-forming process, described later. An excessively low concentration of the dye would result in the formation of an anisotropic dye film lacking in dichroism, whereas an excessively high concentration of the dye would cause the dye to be separated out.

<Cation and Anion>

The composition for an anisotropic dye film according to the present invention preferably contains a cation and a strongly acidic anion that respectively account for contents in the range of 0.9 to 0.99 equivalence and in the range of 0.02 to 0.1 equivalence relative to the content of the acidic groups of the dye.
Adding a cation and an anion so as to satisfy the abovementioned ranges of the content thereof also contributes to the successful production of the anisotropic dye film according to the present invention wherein the time until the relaxation modulus G measured 0.01 seconds after the application of strain drops to 1/10 is equal to or shorter than 0.1 seconds at a temperature of 5°C.
Examples of the cation include an ion of an alkali metal such as lithium, sodium, potassium, rubidium and cesium, an ion of an amine such as ammonia, alkylamine, basic amino acid and hydroxyamine, and a pyridinium ion. Such ions may be used separately or in combination of two or more kinds thereof.
The cation described above includes one combined with an acidic group of the dye so as to form a salt.
Examples of the strongly acidic anion include a monovalent ion derived from hydrochloric acid, nitric acid, perchloric acid or the like, a divalent ion derived from sulfuric acid or the like, and a trivalent ion derived from phosphoric acid or the like. Such ions may be used separately or in combination of two or more kinds thereof.
In addition, the difference between the contents of the cation and the strongly acidic anion in the composition for an anisotropic dye film according to the present invention is preferably in the range of 0.9 to 0.95 equivalence relative to the content of the acidic groups of the dye.
The cation content larger than the upper limit mentioned above would cause defects or cracks originating in dry distortion, whereas the content of the strongly acidic anion larger than the upper limit mentioned above would cause the salts of the cation and the strongly acidic anion to be separated out, thereby resulting in the disruption of the orientation. Also, the content of the strongly acidic anion much larger than the upper limit would deteriorate the solubility of the dye.
More specifically, the composition containing such a cation and a strongly acidic anion can be obtained by preparing a dye having a neutrality ranging from 50% to approximately 80% and another dye having a neutrality of 100% as the dye salt+, and then mixing these dyes with water and strong acid or salt of strong acid at an appropriate ratio.

<Additive Agent>

The composition for an anisotropic dye film according to the present invention may contain an additive agent such as a surfactant as necessary to achieve favorable characteristics such as wettability and coating property to a substrate. Any of anionic, cationic and nonionic surfactants may be used. In general, the concentration of the additive agent in the composition for an anisotropic dye film is preferably in the range of 0.05 to 0.5 wt% because the additive agent satisfying this range is sufficient for achieving the intended effect and does not disrupt the orientation of the dye molecules.
In addition, a pH-adjusting agent, such as a known acid or base, or the like may be added into the composition for an anisotropic dye film according to the present invention to control its pH before or after the components thereof are mixed, for the purpose of reducing the instability, i.e., the possibility of formation of salt or aggregates of the dye or for other purposes.
Furthermore, other known additive agents described in "Additive for Coating," edited by J. Bieleman, Willey-VCH (2000) may also be used.

Moreover, it is also preferable that a compound that has two or more groups selected from the group consisting of acidic, basic and neutral groups, wherein at least one of the two or more groups is a basic group, is added.

The acidic group means a functional group that exhibits pka lower than 7 in an aqueous solution containing an inert supporting electrolyte at a concentration in the range of 0.1 to 3 mol/dm, whereas the basic group means a functional group that exhibits pka equal to or higher than 7 under the same conditions. The neutral group means a functional group that has no dissociation constant. In addition, pka represents the logarithm of the reciprocal of the concentration acid dissociation constant ka, i.e., -log ka, as described in "Kagaku Binran (Handbook of Chemistry), Basic II," p.331 (edited by The Chemical Society of Japan, published by Maruzen Co., Ltd.).

Examples of the acidic group include sulfo, carboxy, and phosphate groups. Examples of the basic group include amino, sulfonium, pyrrol, 3-pyrroline, pyrrolidine, pyrazole, 2-pyrazoline, pyrazolidine, imidazole, 1,2,3-triazole, 1,2,4-triazole, pyridine, pyridazine, piperidine, pyrazine, piperazine, pyrimidine and triazine groups. Examples of the neutral group include hydroxy, aminoxide, sulfoxide and phosphinoxide groups. These groups may have additional substituent groups as long as the substituent groups do not change the characteristics of the composition for an anisotropic dye film according to the present invention significantly.

The abovementioned acidic groups and basic groups may form salt partially or completely. Examples of the salt of the basic group include a salt of an inorganic acid such as hydrochloric acid and sulfuric acid as well as a salt of an organic acid such as acetic acid and formic acid. Also, examples of the salt of the acidic group include a salt of an alkali metal such as Na, Li and K, a salt of an ammonium, which may be substituted by an alkyl group of a hydroxyalkyl group, and an organic amine salt. When the acidic group and the basic group take such a salt form, the number of salt forms does not always have to be one and different salt forms may exist simultaneously.

The molecular weight of the abovementioned compound is typically 60 or higher, preferably 75 or higher, more preferably 100 or higher and most preferably 140 or higher, as well as is preferably 300 or lower, more preferably 250 or lower and most preferably 200 or lower.

The number of carbon atoms contained in the abovementioned compound is preferably 1 or more, more preferably 3 or more and most preferably 6 or more, as well as is preferably 15 or less, more preferably 12 or less and most preferably 10 or less.

Considering the molecular orientation, aggregation properties and other characteristics, the number of basic groups contained in the abovementioned compound needs to be at least 1. However, the number is preferably 2 or more, as well as is preferably 5 or less and more preferably 4 or less. In addition, when the abovementioned compound does not contain any neutral and acidic groups but contains basic groups only, the number of the basic groups is preferably 3 or more, as well as is preferably 5 or less and more preferably 4 or less.

When the abovementioned compound contains acidic groups, the number of the acidic groups needs to be at least 1. However, the number is preferably 4 or less and more preferably 3 or less. In addition, the ratio of the number of the basic groups to the number of the acidic groups is preferably 1.3 or higher and is preferably 4 or lower.

When the abovementioned compound contains neutral groups, the number of the neutral groups needs to be at least 1 but is not particularly limited. However, the number is typically 8 or less and preferably 6 or less.

When the abovementioned compound contains total two or more of acidic, basic and neutral groups, each of the two or more groups may be identical to or different from each other.

The abovementioned compound may be a linear compound or a cyclic compound.

The compound is preferably an amine, and particularly preferably an amino acid, a betaine, a hydroxyamine or a basic-group-containing cyclic compound.

Amino acids are classified into neutral, acidic and basic amino acids based on the number and characteristics of acidic groups and basic groups.

Specific examples of the neutral amino acids include glycine, alanine, valine, leucine, isoleucine, phenylalanine, tyrosine, triptophan, serine, threonine, proline, 4-hydroxyproline, cysteine, cystine, methionine, asparagine, glutamine, β-alanine, citrulline, creatine and kynurenine, with phenylalanine, asparagine, 4-hydroxyproline and β-alanine being particularly preferable.

Also, specific examples of the acidic amino acids include aspartic acid and glutamic acid, with aspartic acid and glutamic acid being particularly preferable.

Furthermore, specific examples of the basic amino acids include lysine, arginine and histidine.

The molecular weight of the amino acid used is typically 60 or higher and preferably 75 or higher, as well as typically 300 or lower and preferably 250 or lower. An excessively high molecular weight of the amino acid would disrupt the orientation of the dye molecules because of the large molecular size thereof, whereas an excessively low molecular weight of the amino acid would result in the insufficient effect of fixing the orientation of the dye molecules.

Examples of the betaines include carboxyalkyltrialkylammonium hydroxides, carboxyalkylpyridinium hydroxides, sulfoalkyltrialkylammonium hydroxides, sulfoalkylpyridinium hydroxides, phosphoalkyltrialkylammonium hydroxides, phosphoalkylpyridinium hydroxides and derivatives thereof, with carboxymethyltrimethylammonium hydroxide and sulfopropylpyridinium hydroxide being preferable.

The molecular weight of the betaine used is typically 60 or higher and preferably 75 or higher, as well as typically 300 or lower and preferably 250 or lower. An excessively high molecular weight of the betaine would disrupt the orientation of the dye molecules because of the large molecular size thereof, whereas an excessively low molecular weight of the betaine would result in the insufficient effect of fixing the orientation of the dye molecules.
Examples of the hydroxyamines include aminoalkyl alcohols, diaminoalkyl alcohols, aminoalkyl diols and diaminoalkyl diols, with aminopropane diol being preferable.
The molecular weight of the hydroxyamine used is typically 60 or higher and preferably 75 or higher, as well as typically 300 or lower and preferably 250 or lower. An excessively high molecular weight of the hydroxyamine would disrupt the orientation of the dye molecules because of the large molecular size thereof, whereas an excessively low molecular weight of the hydroxyamine would result in the insufficient effect of fixing the orientation of the dye molecules.
Examples of the basic cyclic compounds include aminopyridine, diaminopyridine, triaminopyridine, aminopyridazine, diaminopyridazine, triaminopyridazine, aminopyrimidine, diaminopyrimidine, triaminopyrimidine, aminopyrazine, diaminopyrazine, triaminopyrazine, aminotriazine, diaminotriazine and triaminotriazine, with triaminopyrimidine being preferable.
The molecular weight of the basic-group-containing cyclic compound used is typically 60 or higher and preferably 75 or higher, as well as typically 300 or lower and preferably 250 or lower. An excessively high molecular weight of the basic-group-containing cyclic compound would disrupt the orientation of the dye molecules because of the large molecular size thereof, whereas an excessively low molecular weight of the basic-group-containing cyclic compound would result in the insufficient effect of fixing the orientation of the dye molecules.
Such compounds as described above may be used separately or in combination of two or more kinds of compounds, and the compounds to be combined may belong to the same class or different classes. In addition, for example, the amino acid used may consist of a single enantiomer or both enantiomers. The compound may consist of both compounds in a salt form and in a released form, and may consist of compounds having different salt forms.
Adding the abovementioned additive agents into the composition also contributes to the successful production of the composition according to the present invention. For example, even when simply using the dye and the solvent is not enough to produce the composition specified in the present invention, the addition of the abovementioned additive agents may result in the successful production of the composition according to the present invention.

[Anisotropic Dye Film]

The anisotropic dye film according to the present invention formed using such a composition for an anisotropic dye film according to the present invention is explained below.
The composition for an anisotropic dye film according to the present invention can be used to form an anisotropic dye film that has a high dichroism and a high uniformity in a coating film at a high level of productivity. Therefore, the anisotropic dye film according to the present invention formed using such a composition for an anisotropic dye film according to the present invention is a dye film that has a high dichroism and excellent stability, and thus is useful in industry.
The anisotropic dye film according to the present invention exhibits a high dichroic ratio, and the dichroic ratio is preferably 5 or higher, more preferably 10 or higher and most preferably 15 or higher.
Such an anisotropic dye film according to the present invention is formed using the composition for an anisotropic dye film according to the present invention in a dry film-forming process or a wet film-forming process. In the present invention, a wet film-forming process is preferably employed since the composition for an anisotropic dye film containing the dye exhibits liquid crystallinity.
Examples of the dry film-forming process include a method in which a film is formed from a polymer and then stained using the composition for an anisotropic dye film according to the present invention, and a method in which an unstretched film obtained through, for example, the step of forming a film after a polymer stock solution is stained by adding the composition for an anisotropic dye film, is stretched. The abovementioned steps of staining, film-forming and stretching are performed in the common method described below.
A polymer film is immersed in a dye bath that contains the composition for an anisotropic dye film according to the present invention and, as needed, a staining aid such as an inorganic salt including sodium chloride and sodium nitrate and a surfactant, and stained typically at a temperature of 20°C or higher and preferably of 30°C or higher, as well as typically at a temperature of 80°C or lower and preferably of 50°C or lower, typically for 1 minute or longer and preferably for 3 minutes or longer, as well as typically for 60 minutes or shorter and preferably for 20 minutes or shorter. The resulting polymer film is treated with boric acid, if necessary, followed by drying. Alternatively, a polymer is dissolved in water and/or a hydrophilic organic solvent such as an alcohol, glycerol and dimethylformamide, and then the composition for an anisotropic dye film according to the present invention is added into the obtained polymer stock solution for staining. The stained polymer stock solution is processed into a stained film by a flow casting method, a solution application method, an extrusion method or the like. The concentration of the polymer to be dissolved in the solvent is typically 5

wt% or higher and preferably approximately 10 wt% or higher, as well as is typically 30 wt% or lower and preferably approximately 20 wt% or lower, though it depends on the kind of polymer. Also, the concentration of the dye dissolved in the solvent relative to the content of the polymer is typically 0.1 wt% or higher and preferably approximately 0.8 wt% or higher, as well as is typically 5 wt% or lower and preferably approximately 2.5 wt% or lower.

The unstretched film obtained through the abovementioned staining and film-forming steps is uniaxially stretched using an appropriate method. This stretching process results in the orientation of the dye molecules, thereby developing dichroism. Examples of the uniaxial stretching method include tensile stretching in a wet system, tensile stretching in a dry system and pinch roll compression stretching in a dry system, and any of these methods may be used. Although the stretch ratio is typically in the range of 2 to 9, it is preferably in the range of 2.5 to 6 in the case polyvinyl alcohol and the derivative thereof are used as the polymer. After the film is stretched for the orientation of the dye molecules, the stretched film is treated with boric acid for the purpose of improving the water resistance and polarization degree of the stretched film. This boric acid treatment improves the light transmittance and polarization degree of the resulting anisotropic dye film. Although the conditions of the boric acid treatment depend on the kind of hydrophilic polymer and dye used, in general, the concentration of boric acid is typically 1 wt% or higher and preferably approximately 5 wt% or higher, as well as is typically 15 wt% or lower and preferably approximately 10 wt% or lower. The treatment temperature is typically 30°C or higher and preferably 50°C or higher, and in many cases, it is desirable that the treatment temperature is in the range of 80°C or lower. The boric acid concentration of lower than 1 wt% and the treatment temperature of lower than 30°C would result in poor treatment effect, and the boric acid concentration of higher than 15 wt% and the treatment temperature of higher than 80°C would cause the anisotropic dye film to be fragile, so that these conditions are not preferable.

The thickness of the anisotropic dye film obtained in such a dry film-forming process is preferably 10 μm or more and particularly preferably 30 μm or more, as well as is preferably 200 μm or less and particularly preferably 100 μm or less.

On the other hand, examples of the wet film-forming process include a method in which the composition for an anisotropic dye film according to the present invention is prepared as a coating solution, then the coating solution is applied on a substrate, e.g., a glass plate, and dried until the dye molecules are oriented, and subsequently the obtained films are laminated or other known methods. As for the application method, besides known methods described in Pages 253 to 277 of "Coating Kogaku (Coating Engineering)" written by Yuji Harazaki (published by Asakura Publishing Co., Ltd. on March 20, 1971) and Pages 118 to 149 of "Bunshi Kyocho Zairyo no Sosei to Ohyo (Creation and Applications of Harmonized Molecular Materials)" supervised by Kunihiro Ichimura (published by CMC Publishing Co., Ltd. on March 3, 1998), a method in which the coating solution is applied on a substrate that has been subjected to an orientation process by spin coating, spray coating, bar coating, roll coating, blade coating or another coating method. In such a wet film-forming process, an excessively low concentration of the dye contained in the composition for an anisotropic dye film would result in an insufficient dichroism, whereas an excessively high concentration thereof would lead to difficulties in forming the film. The dye concentration in the composition for an anisotropic dye film used in a wet film-forming process is preferably 0.1 wt% or higher and particularly preferably 1 wt% or higher, as well as is preferably 50 wt% or lower and particularly preferably 30 wt% or lower. During the application step, the temperature is preferably in the range of 0 to 80°C, and the humidity is preferably in the range of 10 to 80%RH.

During the process of drying the film, the temperature is preferably in the range of 0 to 120°C, and the humidity is preferably in the range of 10 to approximately 80%RH.

When a wet film-forming process is used to form the anisotropic dye film on a substrate, the thickness of the anisotropic dye film measured after ordinary drying is preferably 50 nm or larger and more preferably 100 nm or larger, as well as is preferably 50 μm or smaller, more preferably 20 μm or smaller and most preferably 1 μm or smaller.

Examples of the substrate used in such a wet film-forming process include films of glass, triacetate, acryl, polyester, triacetyl cellulose and urethane. In addition, an oriented layer may be formed on the surface of this substrate so as to control the direction of orientation of the dichroic dye molecules by a known method described in, for example, Pages 226 to 239 of "Ekisho Binran (Handbook of Liquid Crystal)" (published by Maruzen Co., Ltd. on October 30, 2000).

As needed, a protective layer is formed on the anisotropic dye film of a dichroic dye obtained in a dry or wet film-forming process before the use of the film. Such a protective layer is formed, in practice, by laminating transparent polymer films of triacetate, acryl, polyester, polyimide, triacetyl cellulose or urethane.

Furthermore, when the composition for an anisotropic dye film according to the present invention is used as a polarizing filter or the like for an LCD, an OLED or other indicating devices, the anisotropic dye film according to the present invention may be formed directly on an electrode substrate that has been built in such an indicating device or formed on a substrate prior to that the substrate is installed in such an indicating device.

Also, the anisotropic dye film according to the present invention preferably contains a cation and a strongly acidic anion that respectively account for contents in the range of 0.9 to 0.99 equivalence and in the range of 0.02 to 0.1 equivalence relative to the content of the acidic groups of the dye contained in the anisotropic dye film.

Examples of the cation include an ion of an alkali metal such as lithium, sodium, potassium, rubidium and

cesium, an ion of an amine such as ammonia, alkylamine, basic amino acid and hydroxyamine, and a pyridinium ion. Such ions may be used separately or in combination of two or more kinds thereof.
The cation described above includes one combined with an acidic group of the dye so as to form a salt.
Examples of the strongly acidic anion include a monovalent ion derived from hydrochloric acid, nitric acid, perchloric acid or the like, a divalent ion derived from sulfuric acid or the like, and a trivalent ion derived from phosphoric acid or the like. Such ions may be used separately or in combination of two or more kinds thereof.
In addition, the difference between the contents of the cation and the strongly acidic anion in the composition for an anisotropic dye film according to the present invention is preferably in the range of 0.9 to 0.95 equivalence relative to the content of the acidic groups of the dye.
The cation content larger than the upper limit mentioned above would cause defects or cracks originating in dry distortion, whereas the content of the strongly acidic anion larger than the upper limit mentioned above would cause the salts of the cation and the strongly acidic anion to be separated out, thereby resulting in the disruption of the orientation. Also, the content of the strongly acidic anion much larger than the upper limit would deteriorate the solubility of the dye.
Such an anisotropic dye film may be formed using the composition for an anisotropic dye film containing a cation and a strongly acidic anion that respectively account for contents in the range of 0.9 to 0.99 equivalence and in the range of 0.02 to 0.1 equivalence relative to the content of the acidic groups of the dye, or obtained in other methods.
The anisotropic dye film according to the present invention not only functions as a polarizing film to provide linearly polarized light, circularly polarized light or elliptically polarized light based on anisotropy in light absorption, but also can be functionalized as a film that is anisotropic in terms of refractivity, conductivity or other characteristics by using different kinds of film-formation processes, substrates and dye-containing compositions. Such a functionalized film can be used as a polarizing element in a wide variety of fields and applications.

[Polarizing Element]

The polarizing element according to the present invention is made using the abovementioned anisotropic dye film according to the present invention, and it may be consist of only the anisotropic dye film or made by forming the anisotropic dye film on a substrate. As for the polarizing element wherein the anisotropic dye film is formed on a substrate, the substrate is also regarded as a part of the polarizing element.
when the anisotropic dye film according to the present invention formed on a substrate is used as a polarizing element, the polarizing element may be the formed anisotropic dye film itself or a laminated body produced by laminating functional layers obtained using a wet film-forming process, for example, such a protective layer as described above, an adhesive layer, an antireflection layer, an oriented film, and layers functioning as a retardation film, a brightness enhancement film, a reflection film, a semi-transmissive reflection film or a diffusion film, or other optical functions.
Such a layer having an optical function can be produced by, for example, the following methods.
The layer functioning as a retardation film can be produced by the stretching process such as ones described in Japanese Patent Nos. 2841377 and 3094113, or by the process described in Japanese Patent No. 3168850 or other literature.
Also, the layer functioning as a brightness enhancement film can be produced by the methods for forming fine pores such as ones described in Japanese Unexamined Patent Application Publication Nos. 2002-169025 and 2003-29030, or by laminating two or more cholesteric liquid crystal layers having different central wavelengths of selective reflection.
The layer functioning as a reflection film or a semi-transmissive reflection film can be produced using a metal thin film obtained by vapor deposition, sputtering or the like.
The layer functioning as a diffusion film can be produced by coating the protective layer described above with a resin solution containing fine particles.
Furthermore, the layer functioning as a retardation film and a layer functioning as an optical compensation film can be formed by applying a discotic liquid crystalline compound, a nematic liquid crystalline compound or other liquid crystalline compounds so as to orient the molecules of the applied compound.
The anisotropic dye film according to the present invention can be formed directly on a highly heat-resistant substrate made of glass or the like, and thus can provide a highly heat-resistant polarizing element. Therefore, it can be suitably used not only in liquid crystal displays or organic EL displays but also in applications in which a high heat-resistance is required, such as liquid crystal projectors and in-vehicle display panels.

Examples and Comparative Examples

The present invention is explained in more detail below with reference to examples and comparative examples. However, the present invention is not limited to the following examples within the scope thereof. Hereinafter, "parts" represent "parts by weight."

In the examples and comparative examples described below, the characteristics of the formed dye film were evaluated according to the following methods.

i) Dichroic ratio
The light transmittance of the anisotropic dye film was measured using a spectrophotometer in which an iodine-based polarizing element is placed in the incident optical system, and then the dichroic ratio was calculated using the following equation.

$$\text{Dichroic ratio (D)} = Az/Ay$$

$$Az = -\log(Tz)$$

$$Ay = -\log(Ty)$$

Tz: Transmittance of the dye film for light polarized in the direction of the absorption axis
Ty: Transmittance of the dye film for light polarized in the direction of the polarizing axis
ii) Defects and cracks
The dye film was evaluated for defects and cracks using Nikon Optiphot-POL, a polarization microscope, with a 100x objective lens and a 10x ocular lens at an extinction angle.

Example 1

The composition for an anisotropic dye film was obtained by adding 20 parts of the lithium salt of the abovementioned Dye No.(I-1) into 80 parts of water, stirring the mixture until the salt was dissolved, and then filtering the resulting solution.
In this composition for an anisotropic dye film, the relaxation modulus G measured 0.01 seconds after the application of strain at a temperature of 5°C using the abovementioned method was $9.2 \times 10^1$ dyn/cm$^2$, and the time until the relaxation modulus G dropped to 1/10 was 0.04 seconds, i.e., shorter than 0.1 seconds.
This composition for an anisotropic dye film was applied using an applicator with a gap set at 2 μm (a foursided applicator manufactured by IMOTO MACHINERY Co., Ltd.) on a substrate, which had been prepared by coating a glass plate (75 mm × 25 mm, 1 mm thick) with an oriented polyimide film (approximately 800 Å thick) in a serigraphic method and rubbing the product using a cloth, and then dried in vacuum. In this way, the anisotropic dye film having a thickness of 0.4 μm was obtained.
The obtained anisotropic dye film had neither defects nor cracks. Also, the dichroic ratio measured at a wavelength of 550 nm was 27.

Example 2

The composition for an anisotropic dye film was obtained by adding 30 parts of the lithium salt of the abovementioned Dye No.(II-1) and 1 part of 4,5,6-triaminopyrimidine sulfate (manufactured by Tokyo Chemical Industry Co., Ltd.) into 69 parts of water, stirring the mixture until the added substances was dissolved, and then filtering the resulting solution.
In this composition for an anisotropic dye film, the relaxation modulus G measured 0.01 seconds after the application of strain at a temperature of 5°C using the abovementioned method was $1.8 \times 10^4$ dyn/cm$^2$, and the time until the relaxation modulus G dropped to 1/10 was 0.05 seconds, i.e., shorter than 0.1 seconds.
This composition for an anisotropic dye film was applied in the same procedures as those for Example 1 on the same kind of a substrate as that used in Example 1, providing the anisotropic dye film.
The obtained anisotropic dye film had neither defects nor cracks, and the dichroic ratio measured at a wavelength of 550 nm was 30.

Example 3

The composition for an anisotropic dye film was obtained by adding 15 parts of the lithium salt of purified Dye No.(I-1) mentioned above, 5 parts of the salt of the abovementioned Dye No.(I-1) formed by neutralization with lithium atoms to an extent of 80 mol%, 1 part of purified Alizarin Red S manufactured by Aldrich, and 0.06 parts of lithium chloride into 78.94 parts of water, stirring the mixture until the added substances was dissolved, and then filtering the resulting solution.
In this composition for an anisotropic dye film, the relaxation modulus G measured 0.01 seconds after the application of strain at a temperature of 5°C using the abovementioned method was $9.9 \times 10^1$ dyn/cm$^2$, and the time until the relaxation modulus G dropped to 1/10 was 0.04 seconds, i.e., shorter than 0.1 seconds.
This composition for an anisotropic dye film was applied in the same procedures as those for Example 1 on the same kind of a substrate as that used in Example 1, providing the anisotropic dye film.
The obtained anisotropic dye film had neither defects nor cracks, and the dichroic ratio measured at a wavelength of 550 nm was 28.
The composition analysis of the anisotropic dye film was carried out and as a result, it was found that the total concentration of the cations, lithium and sodium ions, was 0.95 equivalence and the concentration of the strongly acidic anion, chloride ions, was 0.06 equivalence, relative to the content of the acidic groups contained in Dye No.(I-1) and Alizarin Red S.

Example 4

The composition for an anisotropic dye film was obtained by adding 16 parts of the lithium salt of purified Dye No.(I-1) mentioned above, 4 parts of the salt of the abovementioned Dye No.(I-1) formed by neutralization with lithium atoms to an extent of 80 mol%, 1 part of purified Alizarin Red S manufactured by Aldrich, and 0.08 parts of lithium chloride into 78.94 parts of water, stirring the mixture until the added substances was dissolved, and then filtering the resulting solution.
In this composition for an anisotropic dye film, the relaxation modulus G measured 0.01 seconds after the application of strain at a temperature of 5°C using the abovementioned method was $9.2 \times 10^1$ dyn/cm$^2$, and the time until the relaxation modulus G dropped to 1/10 was 0.04 seconds, i.e., shorter than 0.1 seconds.
This composition for an anisotropic dye film was applied in the same procedures as those for Example 1 on the same kind of a substrate as that used in Example 1, providing the anisotropic dye film.
The obtained anisotropic dye film had neither defects nor cracks, and the dichroic ratio measured at a wavelength of 550 nm was 29.
The composition analysis of the anisotropic dye film was carried out and as a result, it was found that the total concentration of the cations, lithium and sodium ions, was 0.99 equivalence and the concentration of the strongly acidic anion, chloride ions, was 0.08 equivalence, relative to the content of the acidic groups contained in Dye No.(I-1) and Alizarin Red S.

Example 5

The composition for an anisotropic dye film was obtained by adding 15.8 parts of the lithium salt of purified Dye No. (III-1) mentioned above, 9.2 parts of the salt of the abovementioned Dye No.(I-1) formed by neutralization with lithium atoms to an extent of 80 mol%, 1.5 parts of the sodium salt of purified Dye No.(III-2) mentioned above, and 15.1 parts of a 1 wt% lithium chloride aqueous solution into 58.4 parts of water, stirring the mixture until the added substances was dissolved, and then filtering the resulting solution.
In this composition for an anisotropic dye film, the relaxation modulus G measured 0.01 seconds after the application of strain at a temperature of 5°C using the abovementioned method was $9.4 \times 10^2$ dyn/cm$^2$, and the time until the relaxation modulus G dropped to 1/10 was 0.04 seconds, i.e., shorter than 0.1 seconds.
This composition for an anisotropic dye film was applied in the same procedures as those for Example 1 on the same kind of a substrate as that used in Example 1, providing the anisotropic dye film.
The obtained anisotropic dye film had neither defects nor cracks, and the dichroic ratio measured at a wavelength of 550 nm was 28.
The composition analysis of the anisotropic dye film was carried out and as a result, it was found that the total concentration of the cations, lithium and sodium ions, was 0.98 equivalence and the concentration of the strongly acidic anion, chloride ions, was 0.04 equivalence, relative to the content of the acidic groups contained in Dye Nos. (III-1) and (III-2).

Comparative Example 1

The composition for an anisotropic dye film having a pH of 7 was obtained by adding 30 parts of the lithium

salt of the dye compound expressed by the abovementioned structural formula (II-1) into 70 parts of water, stirring the mixture until the added substances was dissolved, and then filtering the resulting solution.
In this composition for an anisotropic dye film, the relaxation modulus G measured 0.01 seconds after the application of strain at a temperature of 5°C using the abovementioned method was $2.0 \times 10^4$ dyn/cm$^2$, and the time until the relaxation modulus G dropped to 1/10 was 0.5 seconds, i.e., longer than 0.1 seconds.
This composition for an anisotropic dye film was applied in the same procedures as those for Example 1 on the same kind of a substrate as that used in Example 1, providing the anisotropic dye film.
The resulting anisotropic dye film was observed using a polarization microscope at an extinction angle and as a result, a streak of defects that had been formed along the direction perpendicular to the coating direction with a constant interval, and cracks that had been formed in parallel with the coating direction were found. The dichroic ratio measured at a wavelength of 550 nm was 20, and thus lower than those obtained for the anisotropic dye film according to Examples 1 and 2.

Comparative Example 2

The composition for an anisotropic dye film was obtained by adding 22 parts of the lithium salt of purified Dye No.(I-1) mentioned above and 1.1 parts of purified Alizarin Red S manufactured by Aldrich into 76.9 parts of water, stirring the mixture until the added substances was dissolved, and then filtering the resulting solution.
In this composition for an anisotropic dye film, the relaxation modulus G measured 0.01 seconds after the application of strain at a temperature of 5°C using the abovementioned method was $2.1 \times 10^2$ dyn/cm$^2$, and the time until the relaxation modulus G dropped to 1/10 was 0.15 seconds, i.e., longer than 0.1 seconds.
This composition for an anisotropic dye film was applied in the same procedures as those for Example 1 on the same kind of a substrate as that used in Example 1, providing the anisotropic dye film.
The resulting anisotropic dye film was observed using a polarization microscope at an extinction angle and as a result, a streak of defects that had been formed along the direction perpendicular to the coating direction with a constant interval, and cracks that had been formed in parallel with the coating direction were found. The dichroic ratio measured at a wavelength of 550 nm was 20, and thus lower than those obtained for the anisotropic dye film according to Examples 3 and 4.
The composition analysis of the anisotropic dye film was carried out and as a result, it was found that the total concentration of the cations, lithium and sodium ions, was 1.01 equivalence and the concentration of the strongly acidic anion, chloride ions, was 0.0001 equivalence, relative to the content of the acidic groups contained in Dye No.(I-1) and Alizarin Red S.

Comparative Example 3

The composition for an anisotropic dye film was obtained by adding 25 parts of the lithium salt of purified Dye No.(III-1) mentioned above and 1.5 parts of the sodium salt of purified Dye No.(III-2) mentioned above into 73.5 parts of water, stirring the mixture until the added substances was dissolved, and then filtering the resulting solution.
In this composition for an anisotropic dye film, the relaxation modulus G measured 0.01 seconds after the application of strain at a temperature of 5°C using the abovementioned method was $1.7 \times 10^4$ dyn/cm$^2$, and the time until the relaxation modulus G dropped to 1/10 was 9.4 seconds, i.e., longer than 0.1 seconds.
This composition for an anisotropic dye film was applied in the same procedures as those for Example 1 on the same kind of a substrate as that used in Example 1, providing the anisotropic dye film.
The resulting anisotropic dye film was observed using a polarization microscope at an extinction angle and as a result, a streak of defects that had been formed along the direction perpendicular to the coating direction with a constant interval, and cracks that had been formed in parallel with the coating direction were found. The dichroic ratio measured at a wavelength of 550 nm was 20, and thus lower than that obtained for the anisotropic dye film according to Example 5.
The composition analysis of the anisotropic dye film was carried out and as a result, it was found that the total concentration of the cations, lithium and sodium ions, was 1.01 equivalence and the concentration of the strongly acidic anion, chloride ions, was 0 equivalence, relative to the content of the acidic groups contained in Dye Nos.(III-1) and (III-2).
Based on these results obtained for Examples 1 to 5 and Comparative Examples 1 to 3, it is clear that the use of the composition for an anisotropic dye film, wherein the time until the relaxation modulus G measured 0.01 seconds after the application of strain drops to 1/10 is equal to or shorter than 0.1 seconds at a temperature of 5°C, enables forming an isotropic dye film having a high dichroism and a high uniformity in a coating film.
Although the present invention was described in detail with reference to specific modes, it will be obvious to those skilled in the art that various changes may be made without departing from the spirit and scope of the present invention.
In addition, the present application is based on Japanese Patent Application filed on July 19, 2005 (Japanese Patent Application No. 2005-208751) and Japanese Patent Application filed on November 29, 2005 (Japanese Patent Application

No. 2005-344098), the entire contents of which are hereby incorporated by reference.

## Claims

1. A composition for an anisotropic dye film comprising a dye and being capable of forming a lyotropic liquid crystal phase, wherein the time until the relaxation modulus G measured 0.01 seconds after the application of strain drops to 1/10 is equal to or shorter than 0.1 seconds at a temperature of 5°C.

2. The composition for an anisotropic dye film according to Claim 1, wherein the dye is an azo dye.

3. The composition for an anisotropic dye film according to Claim 1, wherein the composition is used for forming an anisotropic dye film in a wet film-forming process.

4. The composition for an anisotropic dye film according to Claim 1 further comprising a cation and a strongly acidic anion that respectively account for contents in the range of 0.9 to 0.99 equivalence and in the range of 0.02 to 0.1 equivalence relative to the content of the acidic groups of the dye.

5. The composition for an anisotropic dye film according to Claim 1, wherein the dye is a dye whose free acid form is expressed by the following formula: [Chemical Formula 3]

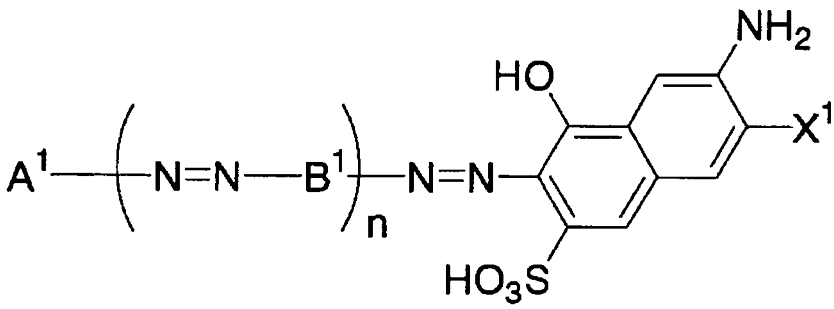

(where $X^1$ represents a hydrogen atom or a sulfo group. $A^1$ represents a phenyl group, a naphthyl group or an aromatic heterocyclic group, and may have any substituent groups. $B^1$ represents an aromatic hydrocarbon group or an aromatic heterocyclic group, and may have any substituent groups. n is 1 or 2.)

6. The composition for an anisotropic dye film according to Claim 5, wherein the dye is a dye whose free acid form is expressed by any one of the following formulae (I-1), (1-2), (11-1), (111-1), (111-2) and (IV-1):

[Chemical Formula 4]

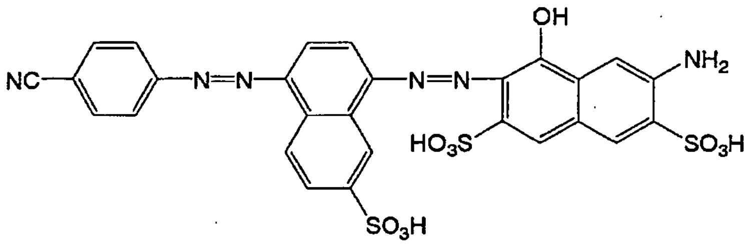

(I −1)

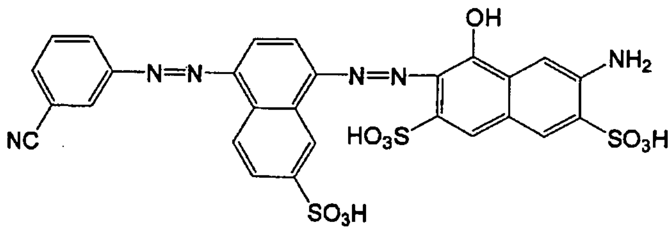

(I −2)

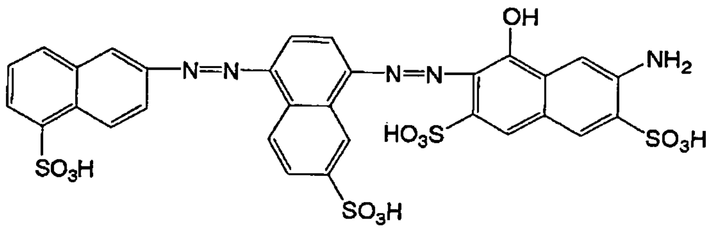

(II −1)

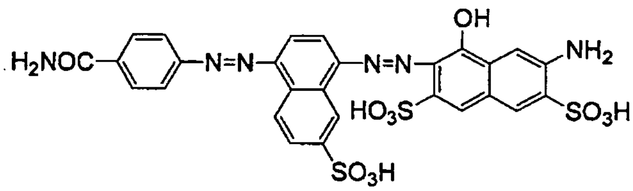

(III−1)

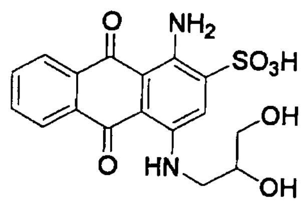

(III−2)

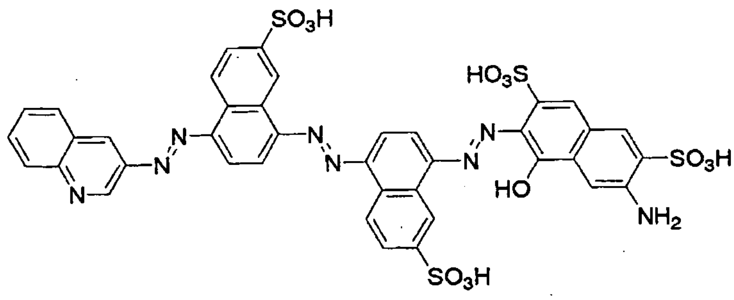

(IV−1)

7. The composition for an anisotropic dye film according to Claim 4, wherein the cation is one ion or two or more ions selected from the group consisting of an alkali metal ion, an ion of an amine and a pyridinium ion.

8. The composition for an anisotropic dye film according to Claim 4, wherein the strongly acidic anion is one ion or two or more ions selected from the group consisting of hydrochloric acid, nitric acid, perchloric acid, sulfuric acid and phosphoric acid.

**9.** The composition for an anisotropic dye film according to Claim 7, wherein the difference between the contents of the cation and the strongly acidic anion in the composition for an anisotropic dye film is in the range of 0.9 to 0.95 equivalence relative to the content of the acidic groups of the dye.

**10.** An anisotropic dye film formed using the composition for an anisotropic dye film according to Claim 1.

**11.** An anisotropic dye film comprising a dye, and a cation and a strongly acidic anion that respectively account for contents in the range of 0.9 to 0.99 equivalence and in the range of 0.02 to 0.1 equivalence relative to the content of the acidic groups of the dye.

**12.** A polarizing element comprising the anisotropic dye film according to Claim 10.

**13.** A polarizing element comprising the anisotropic dye film according to Claim 11.

**INTERNATIONAL SEARCH REPORT**

International application No.
PCT/JP2006/314030

A. CLASSIFICATION OF SUBJECT MATTER
*G02B5/30*(2006.01)i, *G02F1/1335*(2006.01)i

According to International Patent Classification (IPC) or to both national classification and IPC

B. FIELDS SEARCHED

Minimum documentation searched (classification system followed by classification symbols)
G02B5/30, G02F1/1335

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-90526 A (Fuji Film Kabushiki Kaisha), 27 March, 2002 (27.03.02), Par. Nos. [0072] to [0076] & US 2002/84447 A1 | 1-13 |
| A | JP 8-511109 A (Russian Technology Group), 19 November, 1996 (19.11.96), Claims & US 5739296 A & EP 700420 A & WO 94/28073 A1 & DE 69428697 T & RU 2047643 C | 1-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>16 October, 2006 (16.10.06) | Date of mailing of the international search report<br>24 October, 2006 (24.10.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2006/314030

C (Continuation). DOCUMENTS CONSIDERED TO BE RELEVANT

| Category* | Citation of document, with indication, where appropriate, of the relevant passages | Relevant to claim No. |
|---|---|---|
| A | US 6049428 A (Optiva, Inc.),<br>11 April, 2000 (11.04.00),<br>Column 2, line 59 to column 19, line 49<br>& JP 2002-515075 A & EP 792257 A<br>& WO 96/16015 A1 & DE 69530313 T<br>& RU 2110822 C & AU 4405996 A | 1-13 |
| A | JP 2002-180052 A (Fuji Film Kabushiki Kaisha),<br>26 June, 2002 (26.06.02),<br>Par. No. [0042]<br>(Family: none) | 1-13 |
| A | JP 8-302219 A (Sumitomo Chemical Co., Ltd.),<br>19 November, 1996 (19.11.96),<br>Par. No. [0003]<br>(Family: none) | 1-13 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2400877 A
- JP 2841377 B
- JP 3094113 B
- JP 3168850 B
- JP 2002169025 A
- JP 2003029030 A
- JP 2005208751 A
- JP 2005344098 A


### Non-patent literature cited in the description


- **DREYER, J.F.** The Fixing of Molecular Orientation. *Phys. And Colloid Chem,* 1948, vol. 52, 808
- **DREYER, J.F.** Light Polarization From Films of Lyotropic Nematic Liquid Crystals. *Journal de Physique,* 1969, vol. 4, 114
- Chromonics. **J. LYDON.** Handbook of Liquid Crystals. Willey-VCH, 1998, vol. 2B, 981
- Dynamical Properties of Smectics and Columnar Phases. **P.G. DE GENNES ; J. PROST.** The Physics of Liquid Crystals. Clarendon Press, 1993, 408
- **M. GHARBIA ; M. CAGNON ; G. DURAND.** Column undulation instability in a discotic liquid crystal. *J. Physique Lett.,* 1985, vol. 46, L683
- **DREYER, J.F.** The Fixing of Molecular Orientation. *Phys. And Colloid Chem.,* 1948, vol. 52, 808
- Chromonics. **J. LYDON.** Handbook of Liquid Crystals. Willey-VCH, 1998, vol. 2B, 981-1007
- Shinsenryo Kagaku (New Dye Chemistry. GIHODO SHUPPAN Co., Ltd, 396, 409
- Aggregation and lyotropic liquid crystal formation of anionic azo dyes for textile fibers. **D.J. EDWARDS et al.** Physico-Chemical Principles of Color Chemistry. Blackie Academic & Professional, 1996, 83
- Additive for Coating. Willey-VCH
- Kagaku Binran (Handbook of Chemistry. Maruzen Co., Ltd, 331
- Coating Kogaku (Coating Engineering. Asakura Publishing Co., Ltd, 20 March 1971, 253-277
- Bunshi Kyocho Zairyo no Sosei to Ohyo (Creation and Applications of Harmonized Molecular Materials. CMC Publishing Co., Ltd, 03 March 1998, 118-149
- Ekisho Binran (Handbook of Liquid Crystal. Maruzen Co., Ltd, 30 October 2000, 226-239